# EUROPEAN PATENT APPLICATION

(11) **EP 4 362 253 A1**
(43) Date of publication of application: **01.05.2024**
(21) Application number: 23204897.5
(22) Date of filing: 20.10.2023
(51) Int. Cl.: H02G 3/08, H02G 3/12, H02G 3/14

(54) **DEVICE MOUNTING ASSEMBLY FOR VERTICAL AND HORIZONTAL MOUNTING**

(30) Priority: 31.10.2022 IN 202231061907
(71) Applicant: SCHNEIDER ELECTRIC INDUSTRIES SAS, 92500 Rueil-Malmaison (FR)
(72) Inventor: NAYAK, Gireesh Anant, 560067 BANGALORE (IN); THODIYIL, Babish, 560067 BANGALORE (IN); PATIL, Vijay Kumar, 560073 BANGALORE (IN); RANGARAJ, Sangilirajesh, 641104 COIMBATORE (IN)
(74) Representative: Lavoix

(57) **Abstract**

The present invention provides a device mounting assembly (100) for vertical or horizontal mounting of electrical devices (128), said device mounting assembly (100) comprising: an installation box (102), an adapter assembly (104) and a cover plate (106) placed on said adapter assembly (104). The adapter assembly (104) comprises a fixing frame (108) having plurality of paired clipping slots (110) disposed on its inner periphery; and at least one dividing means (112). The dividing means (112) comprises a first set of engagement means (114) disposed at its longitudinal opposite ends; and a second set of engagement means (116) disposed along both of its longitudinally extended surfaces. The profile of said first set of engagement means (114) complements the profile of said corresponding paired clipping slots (110) of said fixing frame (108). Further, the profile of said second set of engagement means (116) is provided with a profile complimentary to that of said electrical device (128).

## Description

### Field of invention:

The present invention generally relates to mounting of electrical or electronic products in different orientation by fixing frames where fixing frames are interactive part between boxes which are flushed or surface mounted in the walls and functions like switch, sockets, etc. More particularly this invention relates to a mounting means facilitating horizontal and vertical fixing of electrical accessories with universal clipping.

### Background of the invention:

In existing practice of installation and mounting of electrical and electronic devices and accessories, fixing frame are fixed on installation box and thereupon the devices are mounted thereon. Some of the installation sites have the requirement of horizontal and vertical orientation of the electrical devices at different heights based on their type of application and space availability. This is also applicable of standard set of different countries throughout.

Now, these two orientation installation leads different direction switching operation, Socket orientation for plug in and Passive Infrared (PIR) functions, and thus could be installed in wrong direction. Thus, disadvantageously, if there is no provision for a suitable mounting orientation, it affects the intended functionality of the PIR. The existing installation systems and method, due to unavailability of pre-define mounting orientations, leads to confusion to the installer or end-user to install right product at the preferred location.

Existing solution to the installation issue requires dedicated fixing frame for each of the electrical accessories, depending on their orientation preference. Next the fixing frames may be ganged together to have them in different orientation. This solution definitely increases number of fixing frames, adding cost to the end-user, more inventory cost to the manufacturer.

Furthermore, the distributer/retailer should maintain extra references even they are low moving and selection of fixing frames is difficult to the installer or end-user.

Therefore the drawbacks in the existing mounting mechanism and assembly thereof consists of:
- No common solutions for horizontal and vertical compatibility.
- One room have different direction for switching operation, different orientations of socket plug in.
- Viewing angle of PIR function is changed by vertical and horizontal mounting.
- Design and development cost is high for different fixing frames.
- Not able to convert normal fixing frame to horizontal and vertical compatibility device.
- There is no customizable platform available for different orientation.
- No availability of divisor or bridges, even so present, it slides in the fixing frame make complexity in the product mounting and required more products mounted unwantedly.
- Distributor or retailer are not ready to have low moving and multiple products for different orientation requirement.

With a view therefore to overcome the drawbacks associated with conventional systems and method of mounting and installation system, the inventors felt the need to devise a device mounting assembly for vertical or horizontal mounting of electrical devices. The present invention facilities the conversion of Horizontal fixing frame into a vertical fixing frame with universal clipping on both direction without compromising product functionality like PIR sensors. This invention influences a Common fixing frame can be mounted in Horizontal orientation at one height from the floor and as vertical orientation in another height and this installation ensure common operating direction for the switch functions, leading to easy installation and eliminates the confusion to select the right fixing frame to right place for the installers end-users. With the present adapter assembly having a divisor means engaged with fixing frame, does not impact on the existing installation practice to the installers or end users. This invention is used by distributor or retailer to eliminate the low moving product in the market in their catalog and it leads to reduce inventory cost to the manufacturer.

### Summary of the invention:

Accordingly, the present invention provides a device mounting assembly for vertical or horizontal mounting of electrical devices, said device mounting assembly comprising:
- an installation box;
- an adapter assembly removably attached with said installation box to removably engage said electrical devices; and
- a cover plate placed on said adapter assembly to cover said electrical devices from a front side of said device mounting assembly,
   wherein said adapter assembly comprises:
      - a fixing frame having plurality of paired clipping slots disposed on oppositely faced inner periphery of said fixing frame; and
      - at least one dividing means removably engaged with two oppositely facing clipping slots of said fixing frame defining a space to adapt said electrical device in a vertical or horizontal orientation,
   said dividing means comprises:
      - a first set of engagement means disposed at its longitudinal opposite ends and
      - a second set of engagement means disposed along both of its longitudinally extended surfaces, the profile of said first set of engagement means complements the profile of said corresponding paired clipping slots of said fixing frame, and said second set of engagement means having a profile complimentary to that of said electrical device.

According to one embodiment of the invention, said dividing means is a single longitudinally extending bar having said first set of engagement means and second set of engagement means.

According to one embodiment of the invention, said dividing means is formed as one pair of longitudinally extending bars bridged with a mounting platform removably engaged with said clipping slots on said fixing frame, said mounting platform having said first set of engagement means disposed at its two opposite edges.

According to one embodiment of the invention, adapter assembly comprises plurality of dividing means removably engaged with said clipping slots on said fixing frame, said dividing means are arranged in a spaced-apart manner to divide the fixing frame and thereupon commensurate dimensions of said electrical devices.

According to one embodiment of the invention, said second set of engagement means of said dividing means comprises:
- plurality of access slots to receive a tool in a guided manner for removal of said electrical device; and
- plurality of arresting ribs to arrest unintentional movement of said electrical device.

According to one embodiment of the invention, said clipping slots on said fixing frame is disposed in a spaced apart manner on oppositely faced inner periphery of said fixing frame in a paired manner.

According to one embodiment of the invention, said dividing means is provided with plurality of mounting holes having a matching profile with their respective screw holes disposed on said fixing frame to receive fasteners therethrough.

According to one embodiment of the invention, said inner periphery of said fixing frame comprise of plurality of flat abutting surface to keep the dividing means in its position.

The present invention further provides, an adapter assembly for vertical and horizontal fixing of electrical devices, said adapter assembly comprising:
- a fixing frame; and
- at least one dividing means removably attached with said fixing frame in a predetermined manner to adapt said electrical devices,
   wherein said fixing frame comprises plurality of paired clipping slots disposed on oppositely faced inner periphery of said fixing frame; and
   wherein said dividing means comprises a first set of engagement means disposed at its longitudinal opposite ends and a second set of engagement means disposed along both of its longitudinally extended surfaces, the profile of said first set of engagement means complements the profile of said corresponding paired clipping slots of said fixing frame, and said second set of engagement means having a profile complimentary to that of said electrical device to adapt said electrical device to fixedly hold in a vertical or horizontal orientation.

### Brief description of the drawings:

Figure 1 illustrates an exploded view of the invented device mounting assembly for vertical or horizontal mounting of electrical devices from a front side, according to one embodiment of the invention.
Figure 2 illustrates the device mounting assembly for vertical or horizontal mounting of electrical devices from a front side.
Figures 3 (a) and 3(b) depict an assembled perspective view of the device mounting assembly from a back-end side and front-end side respectively according to one embodiment of the invention.
Figures 4-5 depict two perspective view of the divisor from two opposite sides showing plurality of engagement means and abutting surfaces to adopt various types of electrical accessories, according to one embodiment of the adapter assembly.
Figure 6 is a top perspective view of a divisor bridged with a mounting platform, according to a second embodiment of the adapter assembly.
Figure 7 is a bottom perspective view of a divisor bridged with a mounting platform, according to the second embodiment of the adapter assembly.
Figure 8 is a top side view of a divisor bridged with a mounting platform, showing the mounting holes according to the second embodiment of the adapter assembly.
Figure 9 depicts a perspective view of an edge portion of the mounting platform according to one embodiment of the invention.
Figure 10 depicts another perspective view of the portion of the mounting platform of the divisor having the mounting hole to facilitate the engagement of the adapter assembly.
Figures 11-12 depict two expanded perspective views of the divisor from two opposite sides showing plurality of engagement means and abutting surfaces to adopt various types of electrical accessories, according to the second embodiment of the adapter assembly.
Figure 13-14 depict two perspective views of the fixing frame from two opposite sides showing plurality of clipping slots and abutting surfaces to engage said divisor along with various types of electrical accessories, according to one embodiment of the adapter assembly.
Figure 15 illustrates an exploded view of the adapter assembly showing the fixing frame along with deviser from a front side, according to the second embodiment of the invention.
Figure 16 depicts a cross sectional side view of the invented device mounting assembly attached with an installation box to mount electrical devices, according to one embodiment of the invention.
Figure 17 depicts cross sectional top view of the adapter assembly, according to one embodiment of the invention.
Figures 18(a)-18(b) depict perspective view of the adapter assembly with the dividing means configured to a horizontal mounting of the electrical devices, according to one embodiment of the invention.

### Detailed description of the drawings:

In the following, numerous specific details are set forth to provide a thorough description of embodiment. Those skilled in the art will recognize and appreciate that, despite of the detailed nature of the exemplary embodiment provided herein; changes and modifications may be applied to said embodiment without limiting or departing from the generally intended scope.

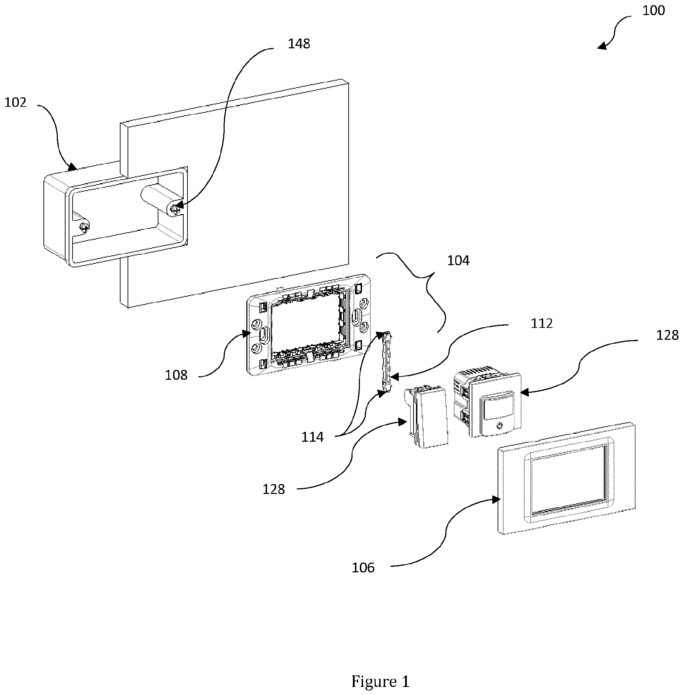

Figure 1 shows a particular embodiment of the device mounting assembly (100). In the exploded view of the invented device mounting assembly for vertical or horizontal mounting of electrical devices (128) from a front side. The mounting assembly (100) comprises an adapter assembly (104) to removably attach various electrical devices such as switches PIRs etc. Being secured with the adapted assembly, the electrical devices (128) are then placed on the installation box (102). The installation box may then be attached with a wall or board with mounting screws (148). Further, a cover plate (106) is placed on said adapter assembly (104) to cover said electrical devices (128) from a front side of said device mounting assembly (100). The cover plate (106) is provided with snap clips (144) and alignment ribs (146) to be attached with the adapter assembly (104) in a guided manner.

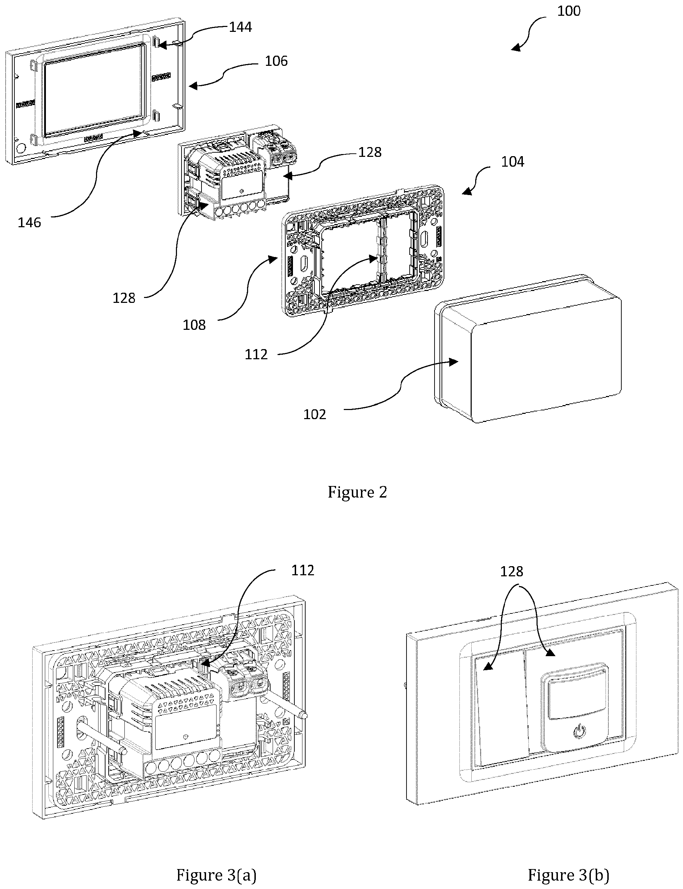

As apparent from the figures 1 and 2, the electrical devices (128) are not square in shape, i.e. they have a non-equal length and breadth. Now, on according to one embodiment of the invention, the adapter assembly (104) comprises a fixing frame (108) and at least one dividing means (112). The dividing means (112), herein after is also termed as 'divisor' having the same meaning and functionality. The fixing frame (108) is chose based on the type and dimension of electrical device (128) which is to be mounted. The dividing means (112) has a longitudinal extend which matched the dimension of the fixing frame (108), specifically either the length or breadth of the fixing frame (108).

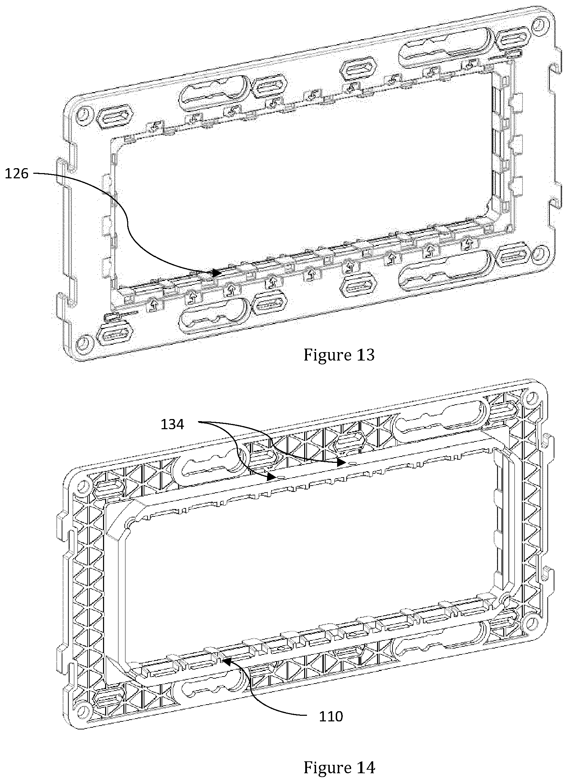

The fixing frame (108) is provided with plurality of clipping slots (110) disposed on its inner periphery. The clipping slots (110), according to a figure 13-14 are disposed as a matching pair on two oppositely faced inner surface. Further, inner periphery of said fixing frame (108) comprise of plurality of abutting surfaces (126) disposed in between the clipping slots (110). The abutting surfaces (126) are generally flat planer surface so that the dividing means (112) in its position are received to keep them in their primary intended position.

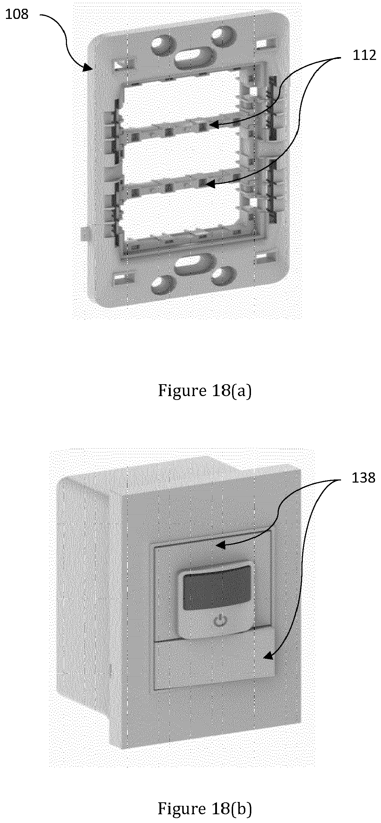

The dividing means (112) are removably engaged with said oppositely disposed clipping slots (110) on the inner periphery of the fixing frame (108). With the provision of such placement of the divisor (112) in the adapter assembly (104), the installer can also make a vertical assembly of the electrical devices as shown in figures 3(a)-3(b) as well as a horizontal mounting of electrical devices (128) as shown in figures 18(a)-18(b). A single as well as plurality of divisors (112) can be engaged with the fixing frame (108) defining an access to the electrical devices (128) based on their type of orientation, i.e. vertical or horizontal orientation.

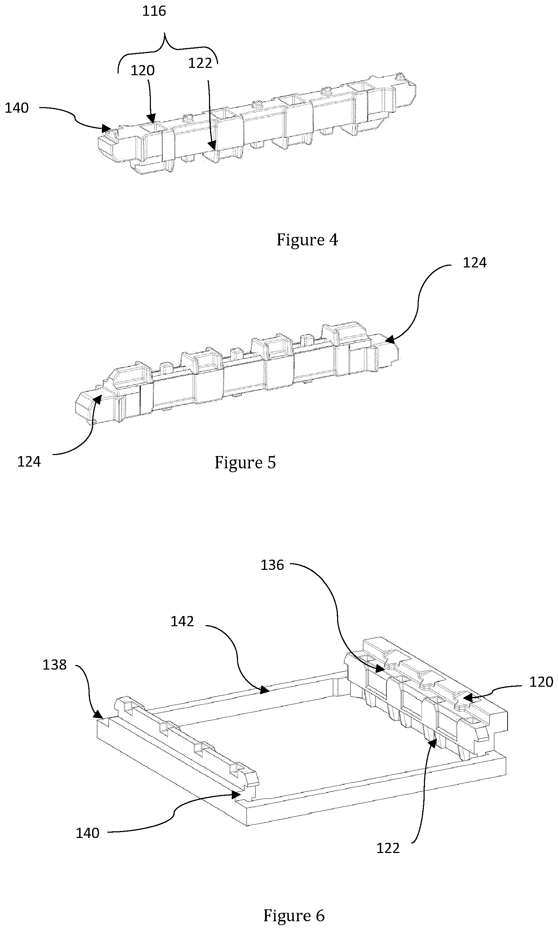

With reference to figures 4-7 to the accompanying drawings, the dividing means (112) comprises: a first set of engagement means (114) and a second set of engagement means (116). The first set of engagement means (114) are disposed at its opposite ends of its longitudinal extends. Adjacent of the first set of engagement means (114), flat butting surface (124) is disposed on the divisor (112). The second set of engagement means (116) are disposed along both of its longitudinally extending surfaces. In the one embodiment shown in figures 4-6, the divisor (112) is a single longitudinally extending bar having said first set of engagement means (114) and second set of engagement means (116). Whereas, in an alternate embodiment of the invention, the divisor (112) is formed as one pair of longitudinally extending bars bridged with a mounting platform (118). The whole component is removably engaged with said clipping slots (110) on said fixing frame (108). In this embodiment, the mounting platform (118) is provided with said first set of engagement means (114) disposed at its two opposite edges.

The profile of said first set of engagement means (114) complements the profile of said corresponding paired clipping slots (110) of said fixing frame (108). The second set of engagement means (116) having a profile complimentary to that of said electrical device, specifically that of the receptacles of the electrical devices (128). The space between to parallelly disposed dividing means (112) or between one dividing means (112) and one inner periphery of the fixing frame (108) defines a space to adapt said electrical device in a vertical or horizontal orientation. The electrical device thus may be attached between the second set of engagement means (116) of the divisor (112) and thus profile of the second set of engagement means (116) and the clipping slots (110) have to match or complement the receptacles of the electrical device (128).

According to one preferred embodiment of the invention, said second set of engagement means (116) of said dividing means (112) comprises plurality of access slots (120) and plurality of arresting ribs (122). The access slots (120) and plurality of arresting ribs (122), can be disposed in an alternative manner on the intended surface of the divisor. When an electrical device is mounted using the invented mounting assembly (100), plurality of access slots (120) define a clearing to receive a tool in a guided manner for removal of said electrical device (128). The plurality of arresting ribs (122) hold the electrical device is its primary intended position to arrest unintentional movement of said electrical device.

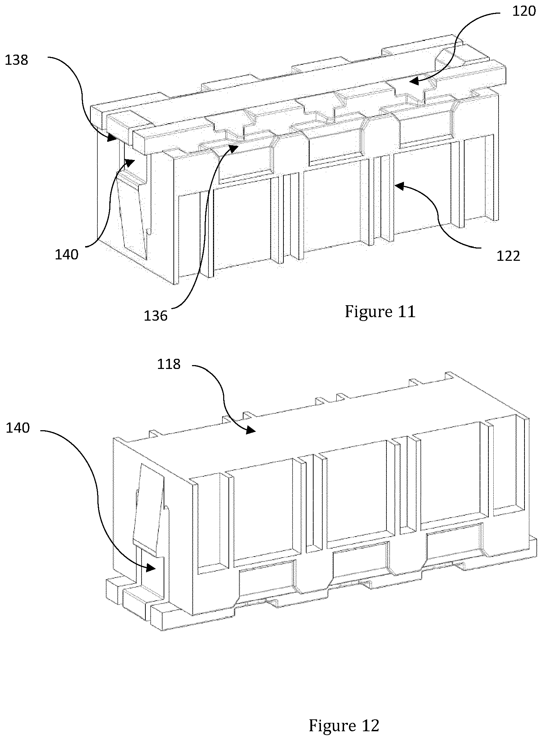

Figures 11 and 12 closely illustrates the access slots (120) to receive the removal tool and plurality of arresting ribs (122) holds the electrical device. According to this preferred embodiment, the arresting ribs (122) are disposed in pairs extending along a side surface of the divisor. When engaged with the divisor (112), receptacles of the electrical devices (128) are guided and placed within the arresting ribs (122). Further, divisor stopper surface (138) and divisor arresting surface (140) are provided to facilitate the engagement of electrical devices. As shown in figures 6-7, the mounting platform (118) is a flat surface having at least one connecting ridge (142) disposed at one of its edges. The connecting ridge (142) can also be disposed as a pair on two of the opposite edges of the mounting platform (118).

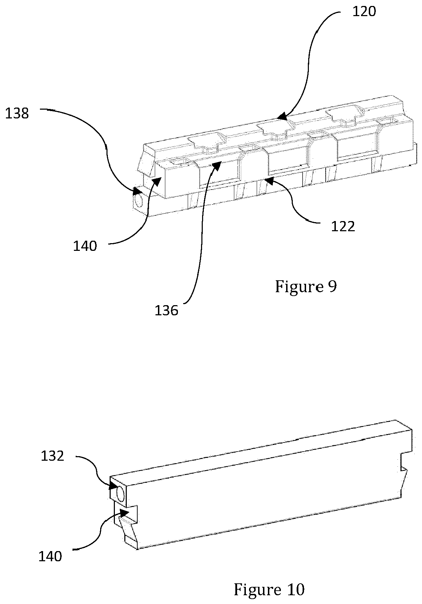

As shown in figure 6, the plurality of attesting ribs (122) as provided in the mounting platform (118), on its other two opposite edges, also facilitates to attach the divisor (112) to the fixing frame (108) in a guided manner. The mounting platform (118) is provided with a divisor stopper surface (138). Plurality of chamfered cuts along with incline surfaces (136) are provided on said mounting platform (118) that guide the receptacle the electrical devices (128), and optionally the inner periphery of the fixing frame (108). According to a preferred embodiment of the invention, as depicted in figure 10, the divisor arresting surface (140) are provided at two opposite edges of the mounting platform (118).

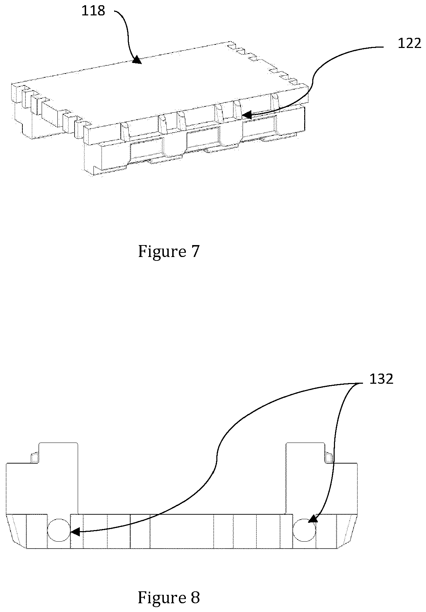

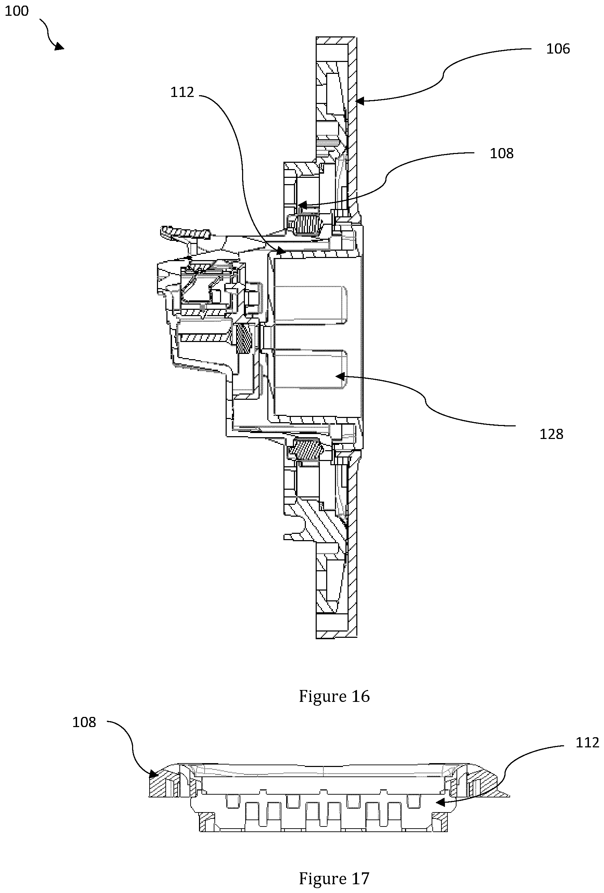

With reference to figures 8 and 10, the dividing means (112) is provided with plurality of mounting holes (132) having a matching profile with their respective screw holes disposed on said fixing frame (108) to receive a fastener (130) therethrough. The divisor stopper surface (138) and divisor arresting surface (140) of figure 9 and 11, is provided on the edge of said mounting platform (118) where the mounting holes (132) are disposed for receiving the fasteners (130) are formed. The cross sectional side view and top view of the invented device mounting assembly (100) attached with an installation box (102) to mount electrical devices (128) is illustrated in figure 16-17 respectively.

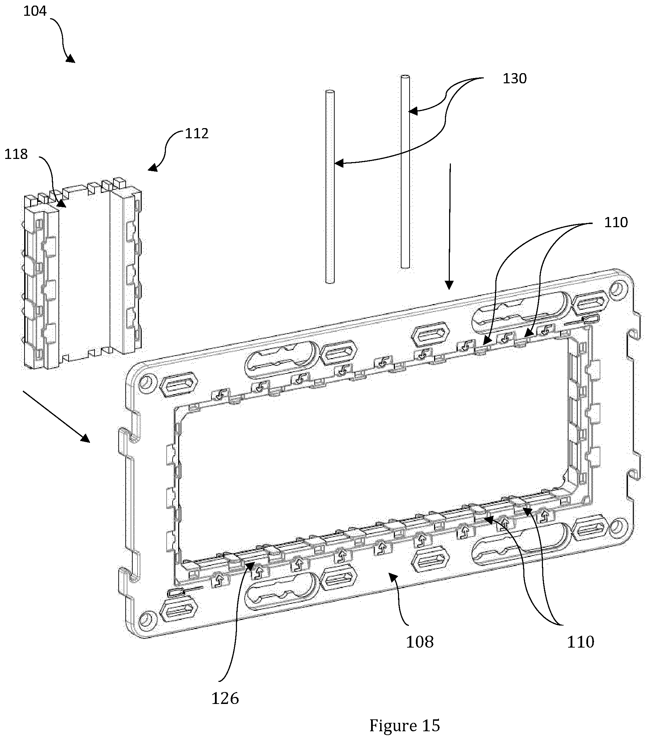

Screw holes (134) of the fixing frame (108), according to one embodiment of the invention shown in figure 14, are formed on a surface protruding along the inner periphery of the fixing frame. Alternatively lug members can be deposed on the surface of the fixing frame (108) to receive the fastener (130) passing through the mounting holes (132) of the divisor (112). Referring to figure 15 of the accompanying drawings, the fasteners (130) are pin members having a longitudinal extend similar to that of said divisor (112). This feature is used to easy slide and guide of the pin through the divisor (112), creating the assembly. According to an alternative embodiment, screw holes (134) with internal threads are used to mount electrical device (128) with fixing frame (108) by using screws.

As already mentioned, the foregoing description is illustrative of the invention and not limitative to its scope, because it will be apparent to persons skilled in the art to devise other alternative embodiments without departing from the broad ambit of the disclosures made herein.

### Part-List:

Device mounting assembly 100
Installation box 102
Adapter assembly 104
Cover plate 106
Fixing frame 108
Clipping slots 110
Dividing means / divisor 112
First set of engagement means 114
Second set of engagement means 116
Mounting platform 118
Access slots 120
Arresting ribs 122
Divisor butting surface 124
Abutting surface (on fixing frame) 126
Electrical device 128
Fasteners 130
Mounting hole 132
Screw hole (on fixing frame) 134
Chamfered cuts along with incline surfaces 136
Divisor stopper surface 138
Divisor arresting surface 140
Connecting ridge 142
Snap clips (on cover plate) 144
Alignment ribs (on cover plate) 146
Mounting screw (on installation box) 148

## Claims

1. A device mounting assembly (100) for vertical or horizontal mounting of electrical devices (128), said device mounting assembly (100) comprising:
- an installation box (102);
- an adapter assembly (104) removably attached with said installation box (102) to removably engage said electrical devices (128); and
- a cover plate (106) placed on said adapter assembly (104) to cover said electrical devices (128) from a front side of said device mounting assembly (100),
wherein said adapter assembly (104) comprises:
- a fixing frame (108) having plurality of paired clipping slots (110) disposed on oppositely faced inner periphery of said fixing frame (108); and
- at least one dividing means (112) removably engaged with two oppositely disposed clipping slots (110) of said fixing frame (108) defining a space to adapt said electrical device in a vertical or horizontal orientation, and
said dividing means (112) comprises:
- a first set of engagement means (114) disposed at its longitudinal opposite ends; and
- a second set of engagement means (116) disposed along both of its longitudinally extended surfaces, the profile of said first set of engagement means (114) complements the profile of said corresponding paired clipping slots (110) of said fixing frame (108), and said second set of engagement means (116) having a profile complimentary to that of said electrical device (128).

2. The device mounting assembly (100) as claimed in claim 1, wherein said dividing means (112) is a single longitudinally extending bar having said first set of engagement means (114) and second set of engagement means (116) disposed thereon.

3. The device mounting assembly (100) as claimed in claim 1, wherein said dividing means (112) is formed as one pair of longitudinally extending bars bridged with a mounting platform (118) removably engaged with said clipping slots (110) on said fixing frame (108), said mounting platform (118) having said first set of engagement means (114) disposed at its two opposite edges.

4. The device mounting assembly (100) as claimed in any of the claims 1 to 3, wherein said adapter assembly (104) comprises plurality of dividing means (112) removably engaged with said clipping slots (110) on said fixing frame (108), said dividing means (112) are arranged in a spaced-apart manner to divide the fixing frame (108) and thereupon commensurate dimensions of said electrical devices (128).

5. The device mounting assembly (100) as claimed in any of the claims 1 to 4, wherein said second set of engagement means (116) of said dividing means (112) comprises:
- plurality of access slots (120) to receive a tool in a guided manner for removal of said electrical device (128); and
- plurality of arresting ribs (122) to arrest unintentional movement of said electrical device (128).

6. The device mounting assembly (100) as claimed in any of the claims 1 to 5, wherein said clipping slots (110) on oppositely faced inner periphery of said fixing frame (108) is disposed in a spaced apart manner.

7. The device mounting assembly (100) as claimed in any of the claims 1 to 6, wherein said dividing means (112) is provided with plurality of mounting holes (132) having a matching profile with their respective screw holes (134) disposed on said fixing frame (108) to receive fasteners (130) therethrough.

8. The device mounting assembly (100) as claimed in any of the claims 1 to 7, wherein said inner periphery of said fixing frame (108) comprise of plurality of flat abutting surfaces (126) to keep the dividing means (112) in its position.

9. An adapter assembly (104) for vertical and horizontal fixing of electrical devices (128), said adapter assembly (104) comprising:
- a fixing frame (108); and
- at least one dividing means (112) removably attached with said fixing frame (108) in a predetermined manner to adapt said electrical devices (128),
wherein said fixing frame (108) comprises plurality of paired clipping slots (110) disposed on oppositely faced inner periphery of said fixing frame (108); and
wherein said dividing means (112) comprises: a first set of engagement means (114) disposed at its longitudinal opposite ends and a second set of engagement means (116) disposed along both of its longitudinally extended surfaces, the profile of said first set of engagement means (114) complements the profile of said corresponding paired clipping slots (110) of said fixing frame (108), and said second set of engagement means (116) having a profile complimentary to that of said electrical device (128) to adapt said electrical device to fixedly hold in a vertical or horizontal orientation.

10. The adapter assembly (104) as claimed in claim 9, wherein said dividing means (112) is a single longitudinally extending bar having said first set of engagement means (114) and second set of engagement means (116).

11. The adapter assembly (104) as claimed in claim 9, wherein said dividing means (112) is formed as one pair of longitudinally extending bars bridged with a mounting platform (118) removably engaged with said clipping slots (110) on said fixing frame (108), said mounting platform (118) having said first set of engagement means (114) disposed at its two opposite edges.

12. The adapter assembly (104) as claimed in any of the claims 9 to 11, wherein said adapter assembly (104) comprises plurality of dividing means (112) removably engaged with said clipping slots (110) on said fixing frame (108), said dividing means (112) are arranged in a spaced-apart manner to divide the fixing frame (108) and thereupon commensurate dimensions of said electrical devices (128).

13. The adapter assembly (104) as claimed in any of the claims 9 to 12, wherein said second set of engagement means (116) of said dividing means (112) comprises:
- plurality of access slots (120) to receive a tool in a guided manner for removal of said electrical device (128); and
- plurality of arresting ribs (122) to arrest unintentional movement of said electrical device (128).

14. The adapter assembly (104) as claimed in any of the claims 9 to 13, wherein said dividing means (112) is provided with plurality of mounting holes (132) having a matching profile with their respective screw holes (134) disposed on said fixing frame (108) to receive fasteners (130) therethrough.
